# EUROPEAN PATENT APPLICATION

(11) **EP 2 783 562 A1**
(43) Date of publication of application: **01.10.2014**
(21) Application number: 12852295.0
(22) Date of filing: 22.11.2012
(51) Int. Cl.: A01D 34/73

(54) **MOWER BLADE AND MOWER**

(30) Priority: 22.11.2011 JP 2011254941; 09.07.2012 JP 2012153640
(71) Applicant: Ito Racing Service Co., Ltd., Okazaki-shi, Aichi 444-3441 (JP)
(72) Inventor: ITO, Takeshiro, Okazaki-shi, Aichi 444-3441 (JP)
(74) Representative: Patentanwälte Olbricht Buchhold Keulertz
(86) International application number: PCT/JP2012/080338
(87) International publication number: WO 2013/077413

(57) **Abstract**

A grass cutter blade of the present invention is for use in a grass cutter. The grass cutter blade inclines: a connection part for connection to the grass cutter; and a peripheral part extending from the connection part as a center and having an outer periphery that is inclined downwardly. The peripheral part is provided with a plurality of cutouts, each of which has an opening at the outer periphery. The peripheral part includes a region located further away from a rotation axis of the grass cutter blade than an edge portion of each of the plurality of cutouts. There exist, in the edge portion, a first end section and a second end section which extend to a deepest section having a deepest depth in a direction toward a center of the grass cutter blade from the outer periphery of the peripheral part, the first end section and the second end section pass through respective regions during rotation of the grass cutter blade, and a distance exists between the respective regions in a direction orthogonal to the rotation axis with respect to a predetermined range in an up-and-down direction.

## Description

### CROSS-REFERENCE TO RELATED APPLICATIONS

This international application claims the benefit of Japanese Patent Applications No.2011-254941 filed on November 22, 2011 and No.2012-153640 filed on July 9, 2012 in the Japan Patent Office, and the entirety of Japanese Patent Applications No.2011-254941 and No.2012-153640 are incorporated herein by reference.

### TECHNICAL FIELD

The present invention relates to a grass cutter blade for use in a grass cutter that performs cutting of weeds, etc.

### BACKGROUND ART

As a handheld grass cutter, there has been used a grass cutter that includes a handle for operation and a drive source such as an engine, and that also includes a grass cutter blade at a front end thereof and the grass cutter blade is to be rotary-driven by the drive source.

Conventionally, as this grass cutter blade, a grass cutter blade that has a flat plate-like shape as a whole and that has a plurality of blades formed in an outer circumference thereof has been mostly used. However, there has been proposed a grass cutter blade configured such that a tip end of the grass cutter blade is inclined upwardly or downwardly (see Patent Documents 1 and 2).

### PRIOR ART DOCUMENTS

### PATENT DOCUMENTS

Patent Document 1: Japanese Unexamined Patent Application Publication No. 5-91814
Patent Document 2: Japanese Unexamined Patent Application Publication No. 61-8301

### SUMMARY OF THE INVENTION

### PROBLEMS TO BE SOLVED BY THE INVENTION

Since a grass cutter blade rotates at an extremely high speed, the following case would occur: for example, if a tip end portion of the grass cutter blade is brought into contact with an installed object, such as an object made of concrete, a wall, a pole buried in the ground, a net, and a fence, or brought into contact with stones, the installed object may be broken or the grass cutter blade itself may be broken.

It is desired to provide a grass cutter blade and a grass cutter which are capable of suppressing breakage of the grass cutter blade itself and an installed object.

### MEANS FOR SOLVING THE PROBLEMS

A grass cutter blade according to a first aspect of the present invention is a grass cutter blade that is used when being attached to a grass cutter and that includes: a connection part for connection to the grass cutter; and a peripheral part extending from the connection part as a center and having an outer periphery that is inclined downwardly. The peripheral part is provided with a plurality of cutouts, each of which has an opening at the outer periphery. The peripheral part includes a region located further away from a rotation axis of the grass cutter blade than an edge portion of each of the plurality of cutouts. There exist, in the edge portion, a first end section and a second end section which extend to a deepest section having a deepest depth in a direction toward a center of the grass cutter blade from the outer periphery of the peripheral part. The first end section and the second end section pass through respective regions during rotation of the grass cutter blade. A distance exists between the respective regions in a direction orthogonal to the rotation axis with respect to a predetermined range in an up-and-down direction.

In the grass cutter blade constituted as above, grass can be cut by an end of the peripheral part, specifically, the edge portion (end face) of the cutout. Since the peripheral part has the region further way from the rotation axis than the edge portion, this edge portion of the cutout is less likely to come into contact with an installed object. On the other hand, the region, which is further away from the rotation axis than the aforementioned edge portion and which is likely to come into contact with the installed object, is not the end face of the cutout. For this reason, even if this region comes into contact with the installed object, the installed object is less likely to be damaged and breakage of the grass cutter blade itself is less likely to occur.

Thus, the grass cutter blade of the first aspect can suppress breakage of an installed object, etc., or breakage of the grass cutter blade itself.

Between the first end section and the second end section in the edge portion of the cutout, the distance exists in the direction orthogonal to the rotation axis. Therefore, grass to be cut by the grass cutter blade is made to easily enter into the cutout. Consequently, a rapid cutting of grass can be achieved.

Moreover, in the aforementioned grass cutter blade of the first aspect, it is configured such that grass can be cut not only by the end of the peripheral part, but also by the edge portion of the cutout in the end of the peripheral part (outer side end). For this reason, even if a front end of the peripheral part, which is inclined downwardly, is brought into contact with the ground, a road surface, etc. and wore out, the grass cutting function is less likely to be deteriorated. On the other hand, in a case of a grass cutter blade with a blade extending horizontally as in a conventional grass cutter blade, if the front end hits against the ground, the blade is worn out and the grass cutting function is easily deteriorated. Therefore, attention needs to be paid during operation, so that the front end does not come into contact with the ground.

That is to say, the grass cutter blade of the first aspect makes it possible to cut grass easily by operating the grass cutter to move the grass cutter blade upwardly and downwardly. As a result, grass can be finely cut. Moreover, even in a case of grass lying on the ground such as dead grass, the grass can be easily cut by making the grass cutter blade be brought into contact with the grass, from an upper side thereof.

The above-described cutout is intended to indicate a portion formed in a cutout shape in the outer periphery of the grass cutter blade. Accordingly, a way of forming the cutout is not specifically limited.

Moreover, the above-described peripheral part may be inclined to have a curved cross section (i.e., in a curved manner), or inclined to have a linear cross section.

A downward direction of the grass cutter blade is a downward direction in a use state of the grass cutter blade, as attached to the grass cutter. In other words, in directions along the rotation axis of the grass cutter blade, a direction toward which a drive source of the grass cutter or a grip part to be used for operation of the grass cutter are provided is an upward direction, and the downward direction is opposite to the upward direction and is directed toward the ground at a time of use. For the purpose of providing a clear explanation of the grass cutter blade, the downward direction is defined based on a direction of the grass cutter that is being used.

Moreover, the aforementioned predetermined range in the up-and-down direction may be configured to be a range extending upwardly from a lower end of the grass cutter blade. When cutting grass, the grass is most likely to come into contact with the grass cutter blade from an underside thereof. Therefore, by providing the aforementioned distance between the first end section and the second end section at the lower end of the grass cutter blade, cutting of grass can be efficiently performed.

Moreover, the aforementioned grass cutter blade of the first aspect may be configured as follows. The region through which the first end section passes during the rotation of the grass cutter blade is located at an outer side of the region through which the second end section passes during the rotation of the grass cutter blade. There is an area interposed between an adjacent two of the plurality of cutouts in the peripheral part. The area has ends: the first end section of one of the adjacent two of the plurality of cutouts; and the second end section of the other of the adjacent two of the plurality of cutouts. The area includes: a first region extending from the first end section in the rotation direction; a second region projecting from an end opposite to the first end section in the first region in a direction away from the rotation axis; and a third region continued to the second end section from a protruding tip end of the second region.

In the above-constituted grass cutter blade, when the grass cutter blade is attached to the grass cutter and rotated, a lifting force is generated. As a result, the grass cutter becomes lighter in weight, and operation of the grass cutter is facilitated. Thereby, grass cutting operation can be easily performed. For example, by adjusting the lifting force so that floating is maintained at a constant height, traces of grass that has been cut can be made less noticeable, thereby providing a neat finish.

Moreover, in order to generate a lifting force by the grass cutter blade, the aforementioned grass cutter blade of the first aspect may be configured as follows. Specifically, it may be configured such that: the region through which the first end section passes during the rotation of the grass cutter blade is located at an outer side of the region through which the second end section passes during the rotation; there is an area interposed between an adjacent two of the plurality of cutouts in the peripheral part, the area has ends: the first end section of one of the adjacent two of the plurality of cutouts; and the second end section of the other of the adjacent two of the plurality of cutouts. The area includes a first surface extending from the first end section toward the second end section, and a second surface extending from the second end section toward the first end section. The first surface includes a surface having a distance from the rotation axis, and the distance from the rotation axis becomes greater as the surface extends from the first end section to the second end section. The second surface includes a surface having a distance from the rotation axis, and the distance from the rotation axis becomes greater as the surface extends from the second section to the first end section.

The first surface and the second surface may be formed to have the above described shapes as a whole. That is, part of the first surface or the second surface may be projected for the purpose of improving strength, etc.

The lifting force can be adjusted, not only by the shape of the grass cutter blade, but also by a rotation speed of the grass cutter. Moreover, it is also possible to adjust the lifting force by boring a through hole, for example, around the connection part of the grass cutter blade. Although the lifting force is decreased when the through hole is provided, the lifting force can be adjusted by applying a tape to close the through hole or providing an open-and-close mechanism for the through hole to close the through hole.

A grass cutter blade of a second aspect of the present invention is a grass cutter blade for use in a grass cutter. The grass cutter blade includes: a connection part for connection to the grass cutter; and a peripheral part extending from the connection part as a center and having an outer periphery that is inclined downwardly. The peripheral part is provided with a plurality of through holes and includes a region located further away from a rotation axis of the grass cutter blade than an edge portion of each of the plurality of through holes. In the edge portion of each of the plurality of through holes, a predetermined range in an up-and-down direction of a front region located in a rotation direction of the grass cutter blade is provided at a position closer to the rotation axis than the predetermined range of the back region located at an opposite side of the rotation direction in the edge portion of each of the through holes.

In the above-constituted grass cutter blade, since the peripheral part has the region located further away from the rotation axis than the edge portion of the through hole, the edge portion of the through hole is less likely to come into contact with an installed object, etc. On the other hand, the region that is located further away from the rotation axis than the aforementioned edge portion and that is likely to come into contact with the installed object is not an end face of the through hole. Therefore, even if this region comes into contact with the installed object, the installed object is less likely to be damaged and breakage of the grass cutter blade itself is less likely to occur.

Accordingly, the aforementioned grass cutter blade of the second aspect can suppress breakage of an installed object, etc., or breakage of the grass cutter blade itself.

Moreover, a protrusion extending in the up-and-down direction and protruding outwardly may be formed in a portion below each of the plurality of through holes in the grass cutter blade.

In the grass cutter blades of the first aspect and the second aspect of the present invention, the connection part may be formed in a surface recessed downwardly from a surrounding portion of the connection part.

In the above-constituted grass cutter blade, a side part of a connecting section between the connection part and a main body of the grass cutter is enclosed and hidden by the surrounding portion located at an upper position of the connection part. Therefore, it is possible to suppress grass, etc. from tangling with the connection section between the connection part and the grass cutter.

Moreover, a grass cutter blade of a third aspect of the present invention is a grass cutter blade that is for a grass cutter and that includes a plurality of blade sections at an outer circumference of the grass cutter blade. The grass cutter blade has a generally circular shape when viewed as a top view, and has a curved shape that is curved downwardly toward the outer circumference. An angle formed by a tip end of each of the plurality of blade sections and a plane through which respective tip ends of at least three of the plurality of blade sections pass, the respective tip ends being located at a side of the outer circumference, is in a range of 30° to 60°.

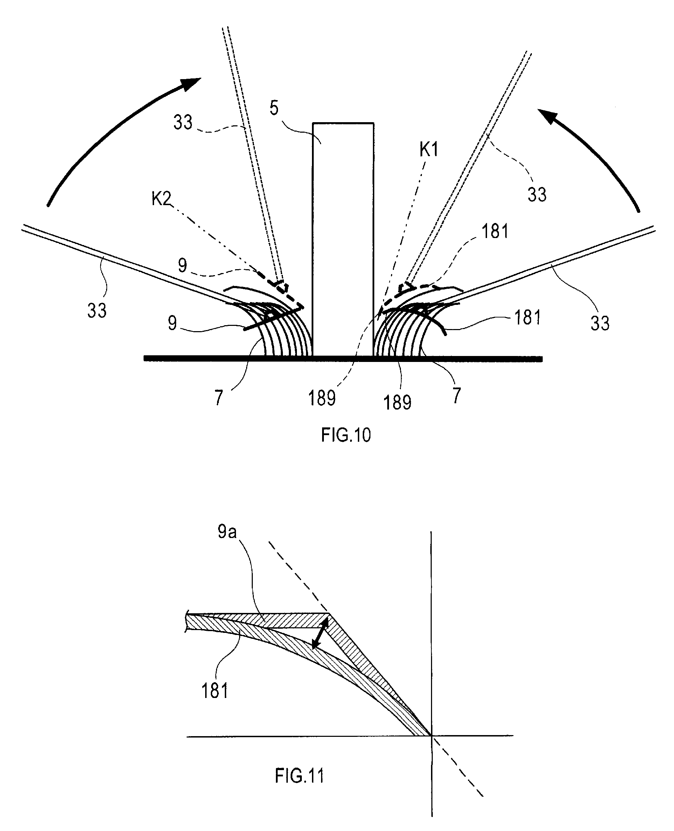

In the grass cutter blade constituted as above, the outer circumference is curved downwardly. Therefore, as in a grass cutter blade 181 shown in a right side in FIG. 10, the blade can be easily made to have an angle at which the blade is close to parallel to an obstacle such as a concrete wall, a utility pole, etc. (i.e., the blade is close to vertical) in a vicinity of the obstacle. Thereby, grass cutting efficiency is improved and workability is improved.

The aforementioned grass cutter blade has a curved shape. Compared with a grass cutter blade having an outer circumference facing downward and having not a curved cross section but a linear cross section, the aforementioned grass cutter blade having the curved shape has a smaller upwardly-projecting part as shown in FIG. 11. Thus, the projecting part is less likely to come into contact with an obstacle, and breakage of the grass cutter blade itself can be suppressed.

Moreover, since a flat portion of the grass cutter blade can be made smaller, an excellent operation of forcing the grass out to be slid down from an upper surface of the grass cutter blade is achieved. Accordingly, tangling of grass is suppressed and workability in cutting grass is improved. When comparing the grass cutter blade having the linear cross section with the grass cutter blade having the curved cross section, as shown in FIG. 11, even if respective tip ends of these two grass cutter blades have the same angle, the grass cutter blade having the curved cross section has a wider inclined surface and thereby making the flat surface smaller. As the flat surface is larger, grass is more likely to be tangled. In this regard, the grass cutter blade of the present invention can make the flat surface smaller, thereby improving workability.

Moreover, a grass cutter according to a fourth aspect of the present invention is a grass cutter provided with the grass cutter blade according to an invention of any one of the first aspect to the third aspect.

In this grass cutter, it is possible to obtain the same effect as that in a case where the grass cutter blade according to the invention of any one of the first aspect to the third aspect.

### BRIEF DESCRIPTION OF THE DRAWINGS

FIGS. 1A to 1C are views showing a grass cutter blade of Embodiment 1, in which FIG. 1A is a perspective view, FIG. 1B is a side elevational view, and FIG. 1C is a plan view thereof.
FIGS. 2A and 2B are side elevational views showing a state in which the grass cutter blade of Embodiment 1 is attached to a grass cutter, in which FIG. 2A is an overall view, and FIG. 2B is an enlarged view of a connecting area between the grass cutter blade and the grass cutter.
FIGS. 3A and 3B are schematic cross-sectional views showing a region through which a first end section passes and a region through which a second end section passes when the grass cutter blade is rotated, in which FIG. 3A shows the grass cutter blade of Embodiment 1, and FIG. 3B shows a grass cutter blade of a modified example.
FIGS. 4A to 4C are views showing a grass cutter blade of Embodiment 2, in which FIG. 4A is a perspective view, FIG. 4B is a side elevational view, and FIG. 4C is a plan view thereof.
FIG. 5 is a view of a cross section taken along V-V in FIG. 4B, in which respective cross sections of two blade sections are shown in an aligned manner.
FIG. 6 is a perspective view showing a grass cutter blade of Embodiment 3.
FIGS. 7A to 7C are perspective views, each of which shows the grass cutter blade in Embodiment 3 in which part of a shape of the grass cutter blade is modified.
FIG. 8 is a perspective view showing a grass cutter blade of Embodiment 4.
FIG. 9 is a cross sectional view showing the grass cutter blade of Embodiment 4.
FIG. 10 is a schematic view illustrating a use state of the grass cutter.
FIG. 11 is a schematic cross-sectional side view in which the grass cutter blade of Embodiment 4 and a conventional grass cutter blade are aligned for comparison.
FIGS. 12A and 12B are views showing a grass cutter blade of a modified example, in which FIG. 12A is a perspective view, and FIG. 12B is a cross sectional view of a cross section taken along XII-XII in FIG. 12A.
FIG. 13 is a plan view showing a grass cutter blade of a modified example.
FIG. 14 is a perspective view showing a grass cutter blade of a modified example.

### EXPLANATION OF REFERENCE NUMERALS

1...grass cutter blade, 3... grass cutter, 5...obstacle, 7...grass, 11...connection part, 13...through hole, 15...flat surface, 17...mountain portion, 21...peripheral part, 21a...position, 23...cutout, 25...deepest section, 27...first end section, 27a...outer periphery, 27b...region, 29...second end section, 29a...outer periphery, 29b...region, 31...engine, 33...pipe shaft, 35...drive shaft, 37...fastener, 39...bolt, 51, 51a...grass cutter blade, 53...connection part, 55...through hole, 57...flat surface, 61...peripheral part, 63...upper section, 63a...convex part, 65...lower section, 67...cutout, 69...deepest section, 71...first end section, 73...second end section, 81, 81a...forward part, 83, 83a...projection, 85...rearward part, 87...convex part, 91, 91a...blade section, 101...convex part, 103...through hole, 111...grass cutter blade, 113...connection part, 115...peripheral part, 117...cutout, 119...deepest section, 121...first end section, 121a....region, 123...second end section, 123a...region, 131...convex, 133...convex, 135...folded-and-bent section, 151...grass cutter blade, 153...connection part, 161...peripheral part, 161a...region, 163...through hole, 165...front region, 167...back region, 171...protrusion, 173...cover part, 181...grass cutter blade, 183...main body, 185...blade part, 187...through hole, 189...blade, 191...protection part

### MODE FOR CARRYING OUT THE INVENTION

Hereinafter, embodiments of the present invention will be described with reference to the drawings.

### [Embodiment 1]

### (1) Structure of Grass Cutter Blade

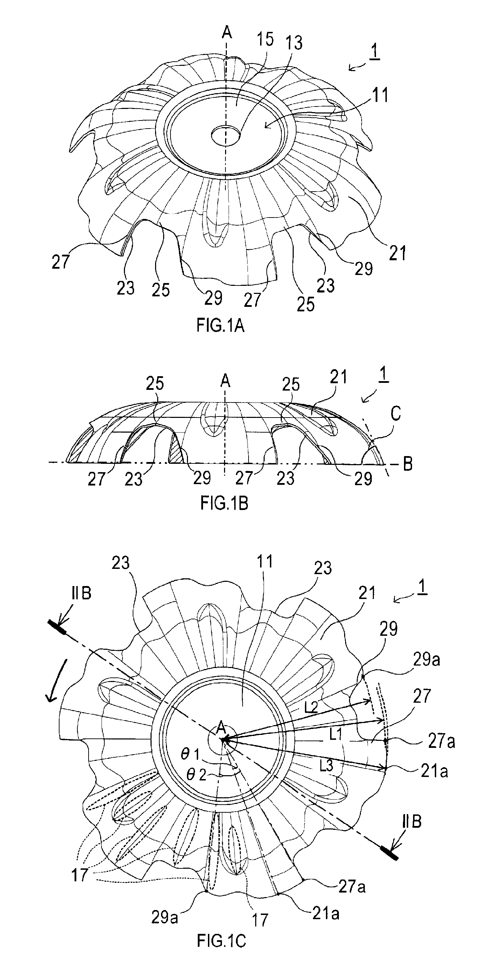

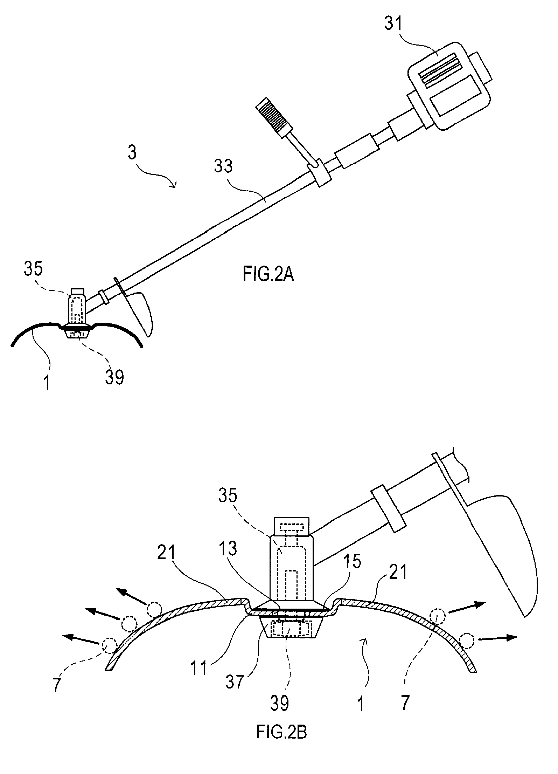

FIGS. 1A to 1C show a grass cutter blade 1 of the present embodiment. The grass cutter blade 1 is used by being connected to a grass cutter 3, as shown in FIG. 2A. The grass cutter blade 1 exhibits a more excellent grass-cutting function when used by being rotated in a counterclockwise direction in FIG. 1C.

The grass cutter blade 1 as a whole is generally circular and disk-shaped. In a center of the grass cutter blade 1, a connection part 11 for connection to the grass cutter 3 is formed.

The connection part 11 is constituted of a through hole 13 formed in a center thereof and a circular flat surface 15 extending around the through hole 13. Around the connection part 11, a peripheral part 21 extending from the connection part 11 as a center is provided. The connection part 11 is formed in a surface recessed downward from a surrounding portion of the peripheral part 21, the surrounding portion surrounding the connection part 11. A line passing through a center of the through hole 13 and orthogonally crossing the flat surface 15 is configured to be a rotation axis A for rotation of the grass cutter blade 1.

As shown in FIGS. 1A and 1B, the peripheral part 21 as a whole is curved such that an outer periphery thereof is inclined downwardly. "Downward" used here is a downward direction in a use state of the grass cutter blade 1 attached to the grass cutter 3. In other words, in directions along the rotation axis A of the grass cutter blade 1, the aforementioned downward direction is an opposite direction of a direction in which an engine 31 as a drive source for the grass cutter 3 and a grip part to be used for operation and so on are provided. An inclined angle of the peripheral part 21 with respect to a plane B that is orthogonal to the rotation axis A of the grass cutter blade 1 gradually becomes larger as the peripheral part 21 extends to an end thereof. The peripheral part 21 is formed such that an inclined angle C at a tip end thereof is 30° to 90°.

In the description hereinafter, "circumferential direction" means a direction along a circumference around the rotation axis A as a center, and "radial direction" means a radial direction of a circle centered on the rotation axis A.

The peripheral part 21 is provided with cutouts 23 formed at six positions that are equally spaced apart from adjacent ones thereof; the cutout 23 has an opening in the outer periphery of the peripheral part 21. A number of the cutouts 23 is not particularly limited, and may be seven or more, or five or less.

In an edge portion of the cutout 23, the peripheral part 21 includes a deepest section 25, a first end section 27, and a second end section 29. The deepest section 25 has a deepest depth in a direction toward the center of the grass cutter blade 1. The first end section 27 and the second end section 29 extend to the deepest section 25, respectively, from both ends of the opening of the cutout 23 in the outer periphery of the peripheral part 21. The first end section 27 and the second end section 29 are faced to each other in respective directions opposite to each other in a rotational direction of the grass cutter blade 1.

As shown in FIG. 1C, when a distance from the rotation axis A to an outer periphery 27a of the peripheral part 21 in the first end section 27 is referred as L1, a distance from the rotation axis A to an outer periphery 29a in the second end section 29 is referred as L2, and a distance from the rotation axis A to a predetermined position 21a at which the cutout 23 is not provided is referred as L3, the relationship is expressed as L3>L1>L2. That is, the position 21a is located further away from the rotation axis A than the edge portion of the cutout 23.

Moreover, an angle θ1 is formed by the position 21a and the outer periphery 27a and has the rotation axis A as a center, and an angle 82 is formed by the outer periphery 27a and the outer periphery 29a and has the rotation axis A as a center. A ratio of the angle θ1 to the angle 82 is in a range of 1/2>θ1/θ2>1/4. That is to say, the position 21a is located closer to the outer periphery 27a than the outer periphery 29a.

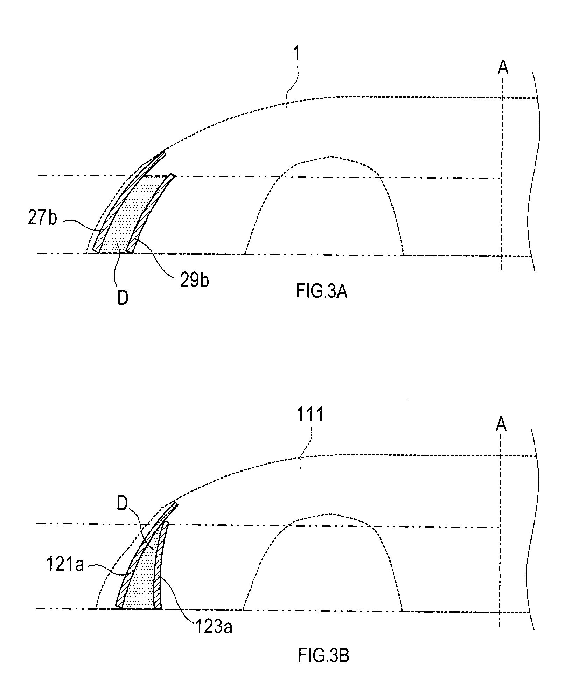

FIG. 3A is a schematic cross-sectional side view showing a region 27b through which the first end section 27 passes and a region 29b through which the second end section 29 passes when the grass cutter blade 1 is rotated. The region 27b has a distance from the region 29b in a direction orthogonal to the rotation axis A with respect to a predetermined range in the direction along the rotation axis A of the grass cutter blade 1 (up-and-down direction), so that the region 27b is located further away from the rotation axis than the region 29b. The predetermined range is a range extending in the upward direction from a lower end of the grass cutter blade 1.

The distance between the region 27b and the region 29b does not change greatly in the up-and-down direction before a vicinity of the deepest section 25, which is not shown in FIG. 3A, and is maintained at a certain distance or more.

In order to enhance strength, the grass cutter blade 1 has a wavy shape. Specifically, when portions raised higher than a surrounding portion thereof are referred as "mountain portion", as shown in FIG. 1C, mountain portions 17 extending in the radial direction are provided in the peripheral part 21 so as to be aligned in the circumferential direction.

### (2) Attachment of Grass Cutter Blade to Grass Cutter

The grass cutter 3 is shown in FIG. 2A. In FIGS. 2A and 2B, the grass cutter blade 1 is shown in a cross section taken along IIB-IIB in FIG. 1C to facilitate understanding. The grass cutter 3 is provided with the engine 31, a pipe shaft 33, a drive shaft 35, and a rotation shaft. The rotation shaft, which is not shown in the drawings, is disposed inside the pipe shaft 33. The engine 31 causes the rotation shaft disposed inside the pipe shaft 33 to rotate, and the drive shaft 35 is rotated by such a rotation force.

As shown in FIG. 2B, in a state where a front end (lower end) of the drive shaft 35 is inserted into the through hole 13 of the connection part 11, the flat surface 15 is interposed between the drive shaft 35 and a fastener 37; a bolt 39 is tightened to the drive shaft 35, thereby securing the grass cutter blade 1 to the drive shaft 35. Consequently, the grass cutter blade 1 can be rotated integrally with the drive shaft 35.

If the engine 31 is driven in a state where the grass cutter blade 1 is attached in the above-described manner, the rotation shaft, which is disposed inside the pipe shaft 33, and the drive shaft 35 rotate. In accordance with this rotation, the grass cutter blade 1 is rotated, thereby allowing cutting of weeds, etc.

### (3) Effect

In the grass cutter blade 1 of the present embodiment, the position 21a in the peripheral part 21 is located at an outer side further from the rotation axis A than the edge portion of the cutout 23. That is, when the grass cutter blade 1 is rotated, the position 21a is likely to first come into contact with an installed object, such as an object made of concrete. The position 21a is located at around a middle area of the peripheral part 21. For this reason, even if the position 21a comes into contact with the installed object, influence of such a contact is smaller than in a case where the edge portion of the cutout 23 comes into contact with the installed object. Therefore, breakage of the installed object, etc., or breakage of the grass cutter blade 1 itself can be suppressed. Moreover, even if the grass cutter blade 1 comes into contact with humans or animals, injury of the humans or animals can be suppressed.

The first end section 27 in the edge portion of the cutout 23 is located further away from the rotation axis A than the second end section 29. Moreover, when the grass cutter blade 1 is rotated, the second end section 29 that is closer to the rotation axis A is located in a leading section along the rotational direction relative to the first end section 27. Therefore, grass to be cut enters into an inside of the cutout 23, thereby facilitating cutting by the first end section 27. As a result, cutting of grass can be promptly performed.

Specifically, grass that has entered into a region D between the region 27b and the region 29b shown in FIG. 3A is cut by the first end section 27. This region D is a region extending in the upward direction from the lower end of the grass cutter blade 1. Since the grass is more likely to come into contact with the grass cutter blade 1 from the downward direction, the grass can be efficiently put into the region D to be cut. Moreover, the distance between the region 27b and the region 29b is maintained at a certain width or more from the lower end of the grass cutter blade 1 to an upper part. Therefore, the grass cutter blade 1 can perform cutting of grass in a preferred manner with respect to a wide range at a side part of the grass cutter blade 1.

Furthermore, in the grass cutter blade 1 of the present embodiment, as shown in FIG. 2B, grass 7 that has been cut or mowed down by the peripheral part 21 is brought into contact with an inclined surface of the grass cutter blade 1 that is rotating. In this case, the grass 7 is forced out in a direction toward an outside (outward in the radial direction) of the grass cutter blade 1. For this reason, the grass is less likely to ride on the grass cutter blade 1. As a result, it is possible to inhibit the grass from being tangled together or to inhibit the grass cutter 3 from dragging the grass inside.

Furthermore, the connection part 11 is formed in the surface recessed downward from the surrounding portion of the peripheral part 21, the surrounding portion surrounding the connection part 11. Therefore, a side part of a connecting section between the connection part 11 and a main body of the grass cutter 3 is hidden from view by the surrounding portion located at an upper position than the connection part 11. Therefore, it is possible to suppress grass that has been cut or grass before being cut, from tangling with the connection section between the connection part 11 and the grass cutter 3.

Moreover, as described above, the peripheral part 21 is, as shown in FIG. 1B, inclined downwardly at the tip end thereof, at the inclined angle C of 30° to 90°. Thereby, breakage of the grass cutter blade 1 itself and installed objects can be suppressed. However, if the inclined angle is excessively large, grass-cutting efficiency is decreased. Moreover, the larger the inclined angle is, the greater an effect of suppressing breakage becomes. In this regard, if it is configured such that the inclined angle C of the peripheral part 21 at the tip end thereof is in a range of 30° to 80°, it becomes possible to maintain high grass-cutting efficiency, while realizing suppression of breakage of the grass cutter blade 1 itself and the installed object and suppression of tangling of grass. If importance is placed on grass-cutting efficiency, the inclined angle C may be set to 30° to 60°. If importance is placed on an effect of suppressing breakage, the inclined angle C may be set to 45° to 80°.

Although the effect of suppressing breakage of the grass cutter blade 1 itself and the installed object is slightly decreased, the inclined angle C may be equal to or less than 30°.

In a case where a diameter of the grass cutter blade 1 is 20 cm to 30 cm and a width of the cutout 23 is 4 cm to 8 cm, it may be preferable that a difference between L1 and L2 is around 8 mm to 20 mm. However, the grass cutter blade 1 may be used by appropriately adjusting this difference depending on the objects to be cut, etc.

### [Embodiment 2]

### (1) Structure of Grass Cutter Blade

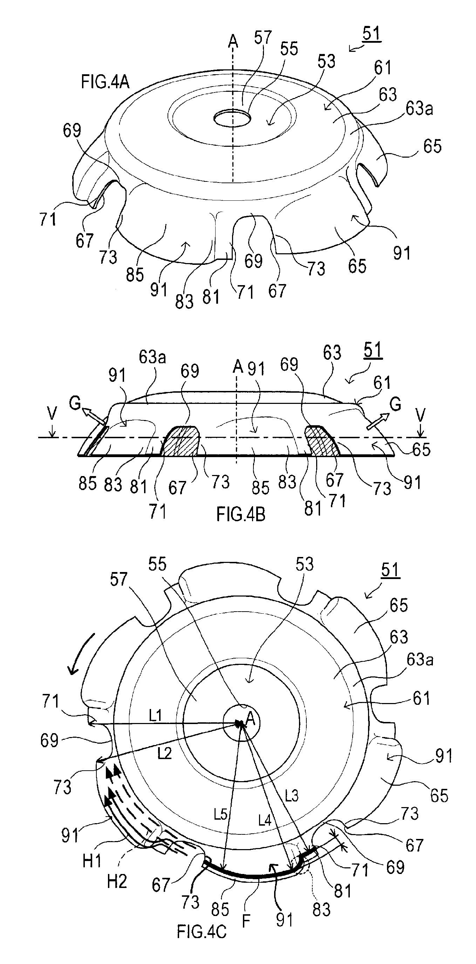

In FIGS. 4A to 4C, a grass cutter blade 51 of the present embodiment is shown. The grass cutter blade 51 is used by being attached to the grass cutter 3 shown in FIG. 2A.

The grass cutter blade 51 as a whole is generally disk-shaped. In a center of the grass cutter blade 51, a connection part 53 for connection to the grass cutter 3 is formed. The connection part 53 is constituted of a through hole 55 formed in a center thereof and a circular flat surface 57 extending around the through hole 55. This grass cutter blade 51 is used so as to be rotated in a counterclockwise direction in FIG. 4C.

Around the connection part 53, a peripheral part 61 extending from the connection part 53 as a center is provided. As shown in FIGS. 4A and 4B, the peripheral part 61 as a whole is curved such that an outer periphery thereof is inclined downwardly. The peripheral part 61 is constituted of a circular upper section 63 and a lower section 65. The upper section 63 is inclined downwardly in a relatively gentle manner in an area adjacent to the connection part 53. The lower section 65 is inclined downwardly at a relatively steep angle around the upper section 63.

Formed in a boundary area between the upper section 63 and the lower section 65 is a convex part 63a. The convex part 63a extends in an elongated manner in the circumferential direction so as to enclose an outer circumference of the upper section 63. The convex part 63a is projected upwardly from the boundary area between the upper section 63 and the lower section 65. This convex part 63a makes it possible to suppress a change in shape of the grass cutter blade 51, particularly, suppress the lower section 65 from opening upwardly.

In the boundary area between the upper section 63 and the lower section 65, instead of the aforementioned convex part 63a, a concave part recessed downwardly may be formed; in this case as well, the aforementioned effect can be achieved.

In the lower section 65, cutouts 67 are formed at six positions that are equally spaced apart from adjacent ones thereof; the cutout 67 has an opening in an outer periphery of the lower section 65. The peripheral part 61 includes a deepest section 69, a first end section 71, and a second end section 73. The deepest section 69 has a deepest depth in a direction toward a center of the grass cutter blade 51 in an edge portion of the cutout 67. The first end section 71 and the second end section 73 extend to the deepest section 69, respectively, from both ends of the opening of the cutout 67 in the outer periphery in the peripheral part 61. As shown in FIG. 4C, when a distance from the rotation axis A to the outer periphery of the peripheral part 61 of the first end section 71 is referred as L1 and a distance from the rotation axis A to the outer periphery in the second end section 73 is referred as L2, the relationship is expressed as L1>L2.

Explanations will be given with respect to shapes of portions of the lower section 65, other than the cutouts 67 in the lower section 65 of the peripheral part 61. The explanations will be given in order starting from a leading section in the rotational direction. Portion F in FIG. 4C is a cross section taken along V-V in FIG. 4B, showing one blade section 91 located between two cutouts 67. The blade section 91 is an entire portion located between the two cutouts 67 and extends in an obliquely downward direction from the upper section 63. The blade section 91 has ends in the circumferential direction. The ends are the first end section 71 of one of the two cutouts 67 between which the blade section 91 is interposed, and the second end section 73 of the other of the two cutouts 67. Portion F (a cross section of the blade section 91) has a shape that does not vary greatly, but is similar in a cross section of any position from at a height of a lower end of the peripheral part 61 to at a height of the deepest section 69 of the cutout 67.

In the blade section 91, a forward part 81 is provided in a predetermined area from the first end section 71 in the circumferential direction. The forward part 81 has a constant distance from the rotation axis A with respect to the circumferential direction. At an end of the forward part 81 located in a following section along the rotational direction, i.e., an end of the forward part 81 located opposite to the first end section 71, a projection 83 that projects in a direction away from the rotation axis A is provided. In the peripheral part 61, a farthest point from the rotation axis A is a vicinity of a peak (a projecting tip) of the projection 83 in the radial direction. A connecting part between the forward part 81 and the projection 83 has a curved surface having a relatively small radius. In the circumferential direction, the projection 83 is raised in the radial direction, and the following connecting part is rounded gradually to form an angle along the circumferential direction. That is to say, the projection 83 has a surface having a distance from the rotation axis A, and the distance from the rotation axis A becomes greater as the surface extends from the first end section 71 to the second end section 73.

In a rearward section of the projection 83, there is provided a rearward part 85 configured to be smoothly continuous without having any concave and convex. The rearward part 85 becomes gradually closer to the rotation axis A, and a rear end of the rearward part 85 is continued to the second end section 73 of the cutout 67. In FIG. 4C, when a distance from the rotation axis A to the forward part 81 is referred as L3, a distance from the rotation axis A to the peak of the projection 83 is referred as L4, and a distance from the rotation axis A to the rearward part 85 is referred as L5, the relationships are expressed as L4>L3 and L4>L5. With respect to L5, in a leading section along the rotational direction (on a side where the projection 83 is provided), the relationship is L5>L3, while in a vicinity of the second end section 73, the relationship is L3>L5. The rearward part 85 has a surface having a distance from the rotation axis A, and the distance from the rotation axis A becomes greater as the surface extends from the second end section 73 to the first end section 71.

Here, the forward part 81 is an example of a first region in the present invention, the projection 83 is an example of a second region in the present invention, and the rearward part 85 is an example of a third region in the present invention. Moreover, each of the forward part 81 and the projection 83 is an example of a first surface in the present invention, and the rearward part 85 is an example of a second surface in the present invention.

### (2) Effect

The grass cutter blade 51 of the present embodiment can provide the same operations and effects as those obtained by the grass cutter blade 1 of Embodiment 1. Moreover, in the grass cutter blade 51 in the present embodiment, it is possible to obtain a lifting force due to rotation. A mechanism of such a configuration will be explained.

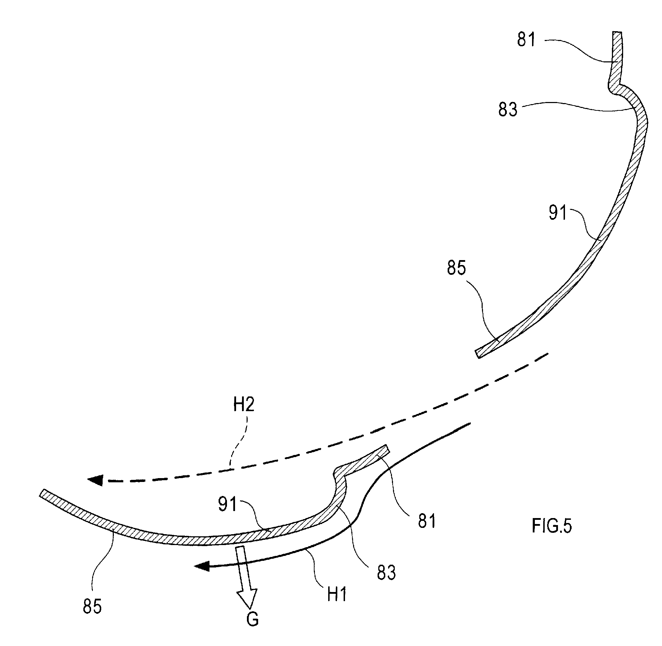

FIG. 5 is a cross section taken along V-V in FIG. 4B. Among arrows shown in FIG. 4C and FIG. 5, a solid-line arrow H1 indicates a flow of air passing through outside of the peripheral part 61 during rotation of the grass cutter blade 51, and a dashed-line arrow H2 indicates a flow of air passing through inside of the peripheral part 61.

The blade section 91 can obtain a lifting force during the rotation, as in wings of an airplane. A flow path expands outwardly at an outside of the peripheral part 61 due to the projection 83. Therefore, a flow speed of air outside of the peripheral part 61 is faster than a flow speed of air inside of the peripheral part 61. Moreover, the rearward part 85 forms an angle of attack. As a result, a lifting force is generated in a direction (a direction of arrow G) intersecting a main surface of the blade section 91. Thereby, the grass cutter blade 51 as a whole can obtain an upward lifting force.

Air passing along an outside of the rearward part 85 flows smoothly toward an outside and an inside of the blade section 91, which is located at a rearward side by the rearward part 85, and which has a smooth surface as shown in FIG. 5. Therefore, a lifting force can be efficiently obtained.

As a result of such a generation of the lifting force in the above-described manner, the grass cutter 3 as a whole becomes lighter and therefore, can be easily operated. Consequently, height adjustment of the grass cutter blade during grass-cutting operation can be facilitated and therefore, grass can be easily trimmed to have a similar height to provide a neat finish. For example, by adjusting a lifting force, floating of the grass cutter 3 is maintained at a constant height. Thereby, traces of grass that has been cut become less noticeable, thereby making it possible to provide a neat finish.

Moreover, since the grass cutter 3 becomes lighter in weight, errors in an operation are less likely to occur. Thus, improved safety can be achieved and the burden of paying attention imposed on a worker can be alleviated.

Since the grass cutter blade 51 is less likely to come into contact with the ground, scattering of pebbles or sand due to such contact can be suppressed. Moreover, since wind is generated when the grass cutter blade 51 is rotated, the wind can be used as a cleaning blower.

In the grass cutter blade 51, the forward part 81, the projection 83, and the rearward part 85 can be configured to have various shapes as long as a lifting force can be obtained. For example, the forward part 81 may be inclined with respect to the circumferential direction. In a case where the grass cutter blade 51 has a diameter of 20 cm to 30 cm, if a width of the forward part 81 in the circumferential direction at a lower end thereof is about 5 mm to 10 mm and a difference (L4-L2) between a distance from the rotation axis A to the forward part 81 and a distance from the rotation axis A to the peak of the projection 83 is about 2 mm to 10 mm, a lifting force can be easily generated in a preferred manner.

### [Embodiment 3]

### (1) Structure of Grass Cutter Blade

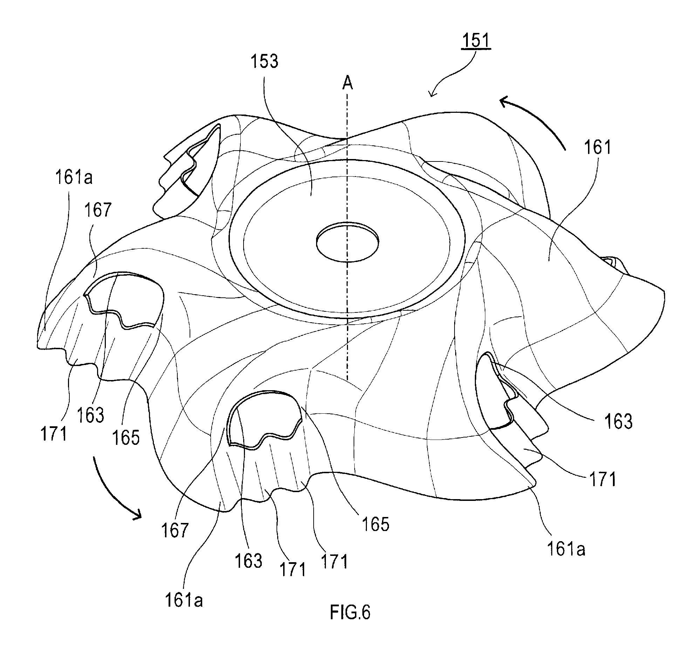

The above-described Embodiments 1 and 2 illustrate the grass cutter blade in which the cutout having the opening at the outer periphery is formed. The present embodiment, however, will describe a grass cutter blade in which, instead of a cutout, a through hole is formed. FIG. 6 shows the grass cutter blade in which a through hole is formed.

A grass cutter blade 151 as a whole is generally disk-shaped. In a center of the grass cutter blade 151, a connection part 153 for connection to the grass cutter 3 is formed. The connection part 153 has a shape that is the same as a shape of the connection part 11 of the grass cutter blade 1 in Embodiment 1.

Around the connection part 153, a peripheral part 161 extending from the connection part 153 as a center is provided. The peripheral part 161 as a whole is curved such that an outer periphery is inclined downwardly. In the peripheral part 161, through holes 163 are formed at six positions that are equally spaced apart from adjacent ones thereof. The peripheral part 161 includes a region 161a located at a position further away from a rotation axis A of the grass cutter blade 151 than an edge portion of the through hole 163.

The grass cutter blade 151 is used to be rotated in a counterclockwise direction. In the edge portion of the through hole 163, a front region 165 located along the rotation direction is provided at a position closer to the rotation axis A than a back region 167 which is located opposite the aforementioned rotation direction. Although in the present embodiment, the front region 165 is, in an overall configuration, provided at a position closer to the rotation axis A than the back region 167, it may be configured such that the front region 165 is provided at a position closer to the rotation axis A than the back region 167 with respect to at least a predetermined area in the up-and-down direction.

Moreover, below the through hole 163 in the grass cutter blade 151, two protrusions 171 extending in the up-and-down direction and protruding outwardly are formed in an aligned manner.

### (2) Effect

In the grass cutter blade 151 constituted as above, the region 161a is located at an outer side further from the rotation axis A than the edge portion of the through hole 163. That is, the region 161a is likely to first come into contact with an installed object, such as an object made of concrete. However, since the region 161a is formed to have a curved surface, influence of such a contact is smaller than in a case where the edge portion of the through hole 163 comes into contact with the installed object. Therefore, breakage of the installed object or the grass cutter blade 151 itself can be suppressed. Moreover, even if the grass cutter blade 151 comes into contact with humans or animals, injury of the humans or animals can be suppressed.

Moreover, the front region 165 is located closer to the rotation axis A than the back region 167. That is to say, the same positional relationship as that of the second end section 29 and the first end section 27 in the grass cutter blade 1 of Embodiment 1 is provided. Accordingly, it is possible to perform cutting of grass in a preferred manner, in the same way as in the grass cutter blade 1.

In the grass cutter blade 151, grass that has been cut is forced out in a direction toward an outside by an inclined surface in the same manner as in the grass cutter blade 1 of Embodiment 1. For this reason, the grass is less likely to ride on the grass cutter blade 151. As a result, it is possible to inhibit the grass from being tangled together or to inhibit the grass cutter 3 from dragging the grass inside.

Unlike in Embodiments 1 and 2, not cutouts but the through holes are formed in the grass cutter blade 151. Accordingly, an outer periphery of the grass cutter blade 151 has a continuous shape without a break. Therefore, it is possible to suppress deformation or breakage of the outer periphery of the grass cutter blade 151 when the grass cutter blade 151 comes into contact with an installed object, etc.

Since a lower part of the through hole 163 has a wavy shape due to existence of the protrusions 171, an improved cutting sharpness in such a wavy part can be achieved.

Meanwhile, the grass cutter blade 151 of the present embodiment does not have cutouts. Although cutouts are effective especially when cutting relatively hard bush, bamboo, and the like, a potion where a cutout is not formed is sufficient to cut relatively soft weeds. For this reason, since the outer periphery of the grass cutter blade 151 has the continuous shape without a break, when cutting relatively soft grass such as weeds, etc., the same rapid cutting or more by the grass cutter blades described in Embodiments 1 and 2 can be performed.

In this regard, since the cutouts are formed in the grass cutter blades in Embodiments 1 and 2, a rapid cutting of a relatively hard grass can be achieved.

### (3) Other Forms

The peripheral part 161 may be formed to have the cross section as shown in FIG. 5, as in the grass cutter blade 51 of Embodiment 2. By forming the peripheral part 161 as above, it is possible to obtain a lifting force due to rotation in the same manner as in the grass cutter blade 51 of Embodiment 2.

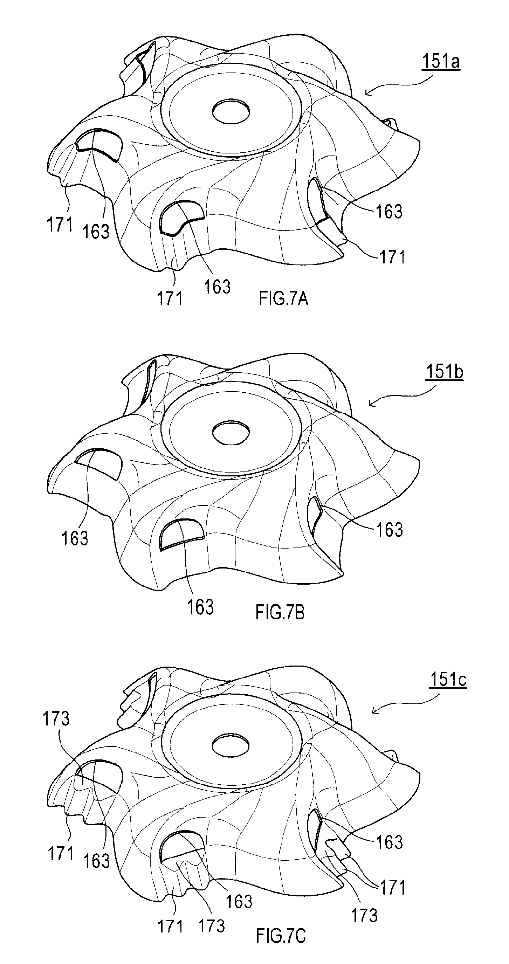

Moreover, the lower part of the through hole 163 is not limited to the shape shown in FIG. 6, but can be various shapes. For example, as shown in FIG. 7A, only one protrusion 171 may be formed in the lower part of the through hole 163. Alternatively, three or more of the protrusions 171 may be formed in the lower part of the through hole 163.

As shown in FIG. 7B, the peripheral part 161 may have a smoothly continuous shape without having the protrusions 171.

As shown in FIG. 7C, a cover part 173 that caps upper ends of protruding portions of the protrusions 171 may be provided in the protrusions 171. The cover part 173 provided as above makes it possible to improve the strength of a section below the through hole 163.

### [Embodiment 4]

### (1) Structure of Grass Cutter Blade

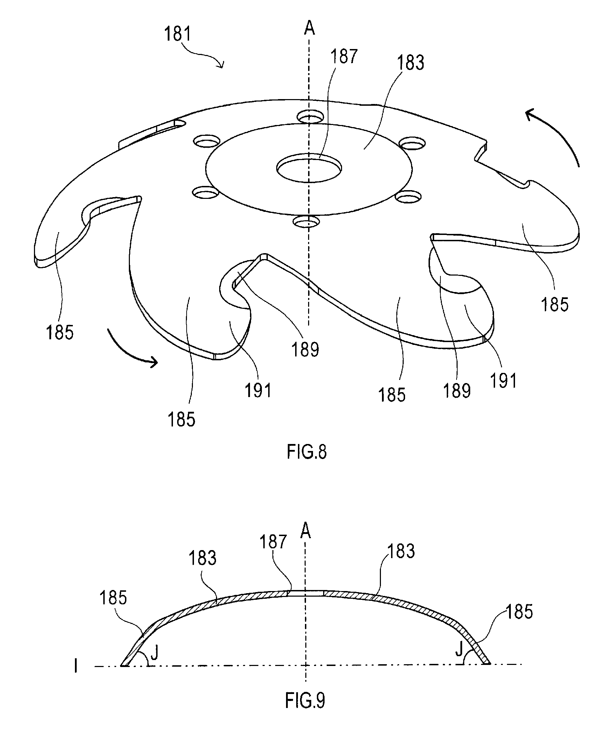

A grass cutter blade 181 of the present embodiment is used by being attached to the grass cutter 3. As shown in FIG. 8, the grass cutter blade 181 includes a plate-like main body 183 having a generally circular shape, and a plurality of blade parts 185.

In a center of the main body 183, a through hole 187 is formed. The through hole 187 is used to attach the grass cutter blade 181 to the drive shaft 35 of the grass cutter 3.

The blade parts 185 are provided so as to extend outwardly from an outer circumference of the main body 183. In the present embodiment, six of the blade parts 185 are disposed to be equally spaced apart from adjacent ones thereof.

In the blade part 185, a blade 189 is provided at an end part located on a leading side of a rotational direction (a direction of arrows shown in FIG. 8). With this blade 189, grass, etc. can be cut. In a tip end of the blade part 185, i.e., an end part in an outer circumferential direction of the grass cutter blade 181, there is provided a protection part 191 in which the blade 189 is not formed. This protection part 191 is projected toward a forward side of the blade 189, i.e., toward the rotational direction. Moreover, the protection part 191 is formed to have an outer-circumference surface that is smoothly curved and that is continuous from the blade 189.

FIG. 9 shows a cross section taken along a plane passing through a rotation axis A of the grass cutter blade 181. The grass cutter blade 181. is relatively flat in an area around the through hole 187; however, the grass cutter blade 181 is gradually curved as the grass cutter blade 181 extends toward the outer circumference; the grass cutter blade 181 has an inclined surface inclined downwardly toward the outer circumference. More particularly, the main body 183 has an inclined surface that is relatively smoothly curved and an inclined surface that is curved with a relatively steep angle in a vicinity of a connection area between the main body 183 and the blade part 185. An angle of the inclined surface becomes larger as the inclined surface extends to the tip end. However, an angle C formed by the tip end of each of the blade parts 185 and a plane B, through which the tip ends of the plurality of the blade parts 185 pass, is configured to be an angle of 30° to 60°.

### (2) Effect

In the above-described grass cutter blade 181 of the present embodiment, when grass that has been cut or mowed down by the blade parts 185 is brought into contact with an inclined surface of the grass cutter blade 181 that is rotating, the grass is forced out toward an outside (outward in the radial direction) of the grass cutter blade 181.

Accordingly, the grass is less likely to ride on the grass cutter blade 181. As a result, it is possible to inhibit the grass from being tangled together or to inhibit the grass cutter 3 from dragging the grass inside.

If the angle of inclination is equal to or greater than 30°, it is possible to reduce a lift-up amount of the grass cutter, which is necessary to make the blade to be more parallel to an obstacle in the vicinity of the obstacle. In addition, since a function of forcing grass out is enhanced, it is possible to effectively suppress the grass from being tangled together. Moreover, if the angle is equal to or less than 60°, working efficiency in a flat land becomes higher. Accordingly, by having the angle C in a range of 30° to 60°, it is possible to achieve both an improved workability by suppressing tangling of grass and an improved workability in the vicinity of an obstacle. If importance is placed on improvement of workability in the vicinity of an obstacle, the angle C may be in a range of 45° to 60°.

Furthermore, in the grass cutter blade 181 of the present embodiment, the blade 189 is less likely to come into contact with stones or concrete walls other than grass due to the protection part 191. Therefore, a nick in a blade or abrasion of a blade can be suppressed. Moreover, since the protection part 191 projects toward the forward side, grass is guided toward the blade 189 by the protection part 191, thereby making it possible to effectively cut grass.

Moreover, since the outer circumference of the protection part 191 is formed to have the curved surface, impact when contacting a stone, etc., can be made smaller. Thus, it is possible to reduce a risk of breakage of the protection part 191 itself, suppress occurrence of intensely forcing a stone, etc., out by the grass cutter blade 181 that is rotating, and suppress breakage of a wall made of concrete, etc.

In the meantime, when cutting of weeds growing around an obstacle, such as a concrete wall, a utility pole, etc., it is desirable that the blade is brought into contact with weeds in such a manner that the blade is directed to be close to parallel to the obstacle (a direction in which the blade is close to vertical) as much as possible. One method for achieving such a configuration of the blade is to raise the pipe shaft 33 upwardly. However, in a case of the grass cutter blade 181 in the above-described embodiment, as shown in a right side of an obstacle 5 in FIG. 10, the blade 189 is inclined downwardly. For this reason, even if an angle of raising the pipe shaft 33 is small, the blade can be made to form an angle (K1 in the figure) that is close to vertical, thereby improving workability.

On the other hand, when a conventional grass cutter blade 9 is used, as shown in a left side in FIG. 10, even if the pipe shaft 33 is raised as much as possible, an angle (K2 in the figure) of the blade does not become very close to vertical, resulting in a poor workability.

If the blade is directed to be close to parallel to the obstacle 5 and brought into contact with the grass 7, it is possible to suppress breakage of the blade itself due to being hit by the obstacle 5. Furthermore, if the blade is brought into contact with the grass 7 from multiple directions, it is possible to efficiently cut the grass 7.

Meanwhile, even if the outer circumference is inclined downwardly, in a case of a grass cutter blade 9a having a cross section that is not curved but linear, as shown in FIG. 11, an upwardly-projecting portion of the grass cutter blade 9a is larger than that of the grass cutter blade 181 having a curved cross section. That is to say, in the grass cutter blade 181, the projecting portion is less likely to come into contact with an obstacle. Therefore, workability can be improved and breakage of the grass cutter blade itself can be suppressed.

### [Modified Example]

The embodiments of the present invention have been described as above. However, needless to say, the present invention should not be limited to the above-described embodiments, and can be carried out in various manners without departing from the technical scope of the present invention.

For example, materials of the grass cutter blade in each of the above-described embodiments are not particularly limited. However, when the grass cutter blade is in contact with an installed object, the grass cutter blade is strongly affected by a force of bending downwardly. For this reason, use of a high-tensile strength steel can reduce breakage of the grass cutter blade itself.

Although each of the above-described embodiments illustrates a configuration in which the inclined surface in the outer periphery is curved, the inclined surface may be inclined such that part of the cross-section is linear.

Moreover, in the above Embodiments 1 to 3, it is illustrated that regions other than the connection parts 11, 53, and 153 are entirely curved. However, for example, one part of a section adjacent to each of the connection parts 11, 53, and 153 may be formed to be a flat surface intersecting the rotation axis A.

It is illustrated that the connection parts 11, 53, and 153 are formed in a surface recessed downwardly from a surrounding portion thereof. However, the connection parts 11, 53, and 153 may be formed in a surface that has a height the same as or higher than a height of the surrounding portion. Furthermore, it is illustrated that the connection part 11 is constituted of the through hole 13 and the flat surface 15, and that the connection part 53 is constituted of the through hole 55 and the flat surface 57. However, a specific form of the connection parts 11 and 53 is not particularly limited as long as the connection parts 11 and 53 can be connected to the grass cutter 3.

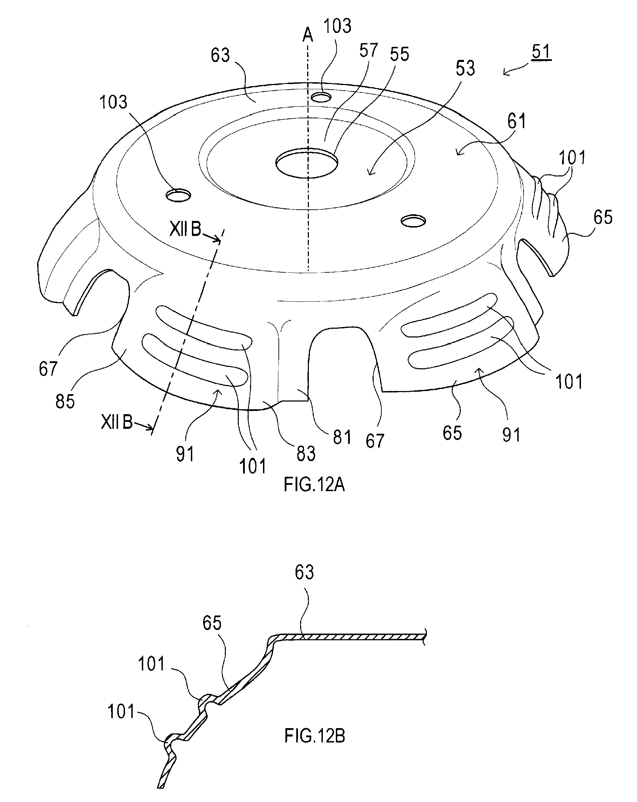

As shown in FIGS. 12A and 12B, in the grass cutter blade 51 described in Embodiment 2, convex parts 101 having a length in the circumferential direction may be provided in the blade section 91. The grass cutter blade constituted as above can enhance strength of the blade section 91, thereby suppressing deformation of the blade section 91. A number of the convex parts 101 is not limited to two shown in the figure, but may be one, or three or more. Moreover, instead of the convex parts, concave parts may be provided.

For the purpose of adjusting a lifting force, through holes 103 may be formed in the upper section 63. A number and a size of the through hole 103 are not particularly limited; however, as the number and the size of the through holes 103 become greater, a lifting force decreases. Therefore, by applying a tape to close the through holes or providing an open-and-close mechanism for the through holes so as to reduce opening areas of the through holes, it becomes possible to adjust a lifting force so that the lifting force is not excessively decreased.

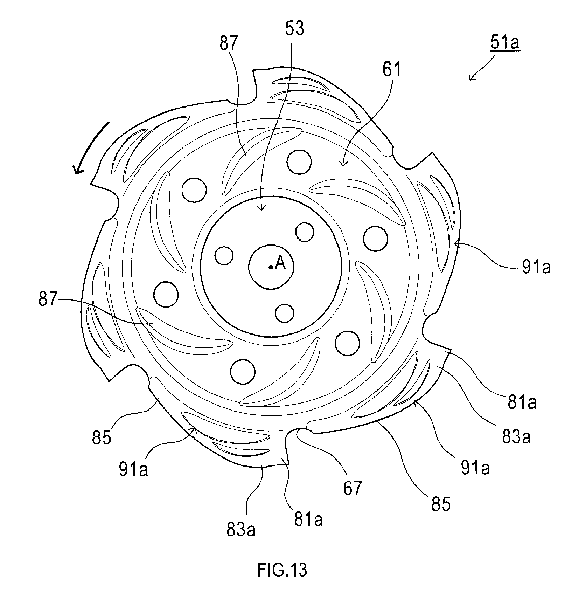

Furthermore, as in a grass cutter blade 51a shown in FIG. 13, convex parts 87 that extend in an inclined manner with respect to the circumferential direction may be provided in the upper section 61. The convex part 87 becomes closer to the rotation axis A as the convex part 87 extends toward the leading section along the rotational direction. The convex part 87 is configured to move grass outwardly during rotation of the grass cutter blade 51a. Consequently, it is possible to suppress, in a more excellent manner, the grass from being tangled with the connection section between the connection part 53 and the grass cutter 3. Moreover, since the convex part 87 has the aforementioned shape, a significant air resistance is not caused during the rotation of the grass cutter blade 51a. Therefore, occurrence of problems, such as noise, reduction of a rotation amount, and so on, can be suppressed.

Meanwhile, for example, as in the mountain portions 17 of the grass cutter blade 1 in Embodiment 1, there is a case where the grass cutter blade has a wavy portion to enhance strength thereof. In this case as well, as in the aforementioned convex part 87, it can be configured such that a peak of the wavy portion that is inclined with respect to the circumferential direction and that becomes closer to the rotation axis A as the wavy portion extends toward a leading section along the rotational direction. Thereby, reduction of air resistance can be achieved.

In the grass cutter blade 51 shown in FIGS. 4, 12A, and 12B, the forward part 81 and the projection 83 are connected at the connecting part with a curved surface having a relatively small radius, and the connecting part has a relatively large angle. On the other hand, in the grass cutter blade 51a in FIG. 13, the connecting part between the forward part 81a and the projection 83a has a small angle, and the entire blade section 91a, except for a convex portion, has a smooth surface. In the grass cutter blade 51a constituted as above, it is possible to obtain a lifting force in the same manner as in the grass cutter blade 51.

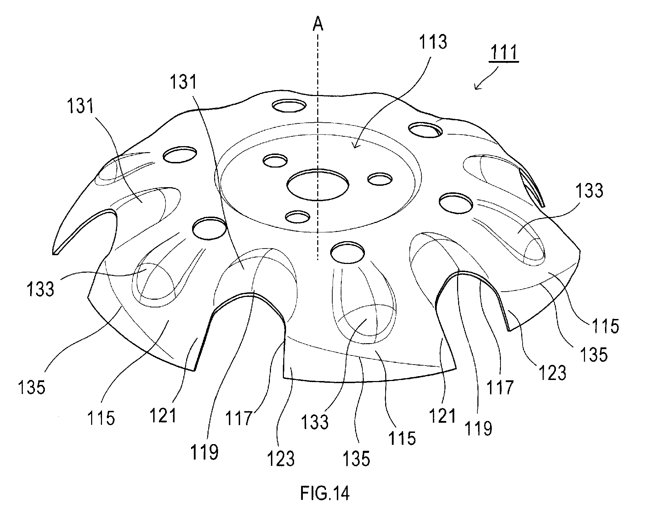

The grass cutter blade of the present invention may be constituted as in a grass cutter blade 111 shown in FIG. 14. The grass cutter blade 111 includes a connection part 113, and a peripheral part 115 having an outer periphery inclined downwardly. In the grass cutter blade 111, a plurality of cutouts 117, each of which has an opening in the outer periphery, are provided. In the outer periphery of the peripheral part 115, there is a region located at a position further from the rotation axis A of the grass cutter blade 111 than an edge portion of the cutout 117.

In a vicinity of a deepest section 119 of the cutout 117, a convex 131 projecting outwardly is formed. In a middle part between the adjacent convexes 131, a convex 133 is formed. These convexes 131 and the convexes 133 enhance strength of the grass cutter blade 111. Accordingly, it is possible to suppress deformation of the peripheral part 115 so that the peripheral part 115 is not deformed to be open or bent upwardly.

With respect to a first end section 121 and a second end section 123 which are continued to the deepest section 119, a region through which the first end section 121 passes during rotation is located at an outer side of a region through which the second end section 123 passes during rotation.

The peripheral part 115 is bent inwardly at a folded-and-bent section 135 located in a vicinity of the outer periphery. The folded-and-bent section 135 becomes closer to a center of the grass cutter blade 111 as the folded-and-bent section 135 extends to the second end section 123, while being close to the outer periphery of the peripheral part 115 at a side of the first end section 121.

FIG. 3B is a schematic cross sectional side view showing a region 121a through which the first end section 121 passes and a region 123a through which the second end section 123 passes, when the grass cutter blade 111 is rotated. In a predetermined range in the direction along the rotation axis A of the grass cutter blade 111 (up-and-down direction), the region 121a has a distance in a direction orthogonal to the rotation axis A so as to be located at a position further away from the rotation axis than the region 123a. In the grass cutter blade 111, a region D between the regions 121a and 123a becomes wider as the region D extends toward a lower end of the grass cutter blade 111, while becoming narrower as the region D extends toward an upper end of the grass cutter blade 111.

## Claims

1. A grass cutter blade for use in a grass cutter, the grass cutter blade comprising:
a connection part for connection to the grass cutter; and
a peripheral part extending from the connection part as a center and having an outer periphery that is inclined downwardly,
wherein the peripheral part is provided with a plurality of cutouts, each of which has an opening at the outer periphery, and the peripheral part includes a region located further away from a rotation axis of the grass cutter blade than an edge portion of each of the plurality of cutouts, and
wherein there exist, in the edge portion, a first end section and a second end section which extend to a deepest section having a deepest depth in a direction toward a center of the grass cutter blade from the outer periphery of the peripheral part, the first end section and the second end section pass through respective regions during rotation of the grass cutter blade, and a distance exists between the respective regions in a direction orthogonal to the rotation axis with respect to a predetermined range in an up-and-down direction.

2. The grass cutter blade according to claim 1,
wherein the predetermined range is a range extending upwardly from a lower end of the grass cutter blade.

3. The grass cutter blade according to claim 1 or claim 2,
wherein the region through which the first end section passes during the rotation is located at an outer side of the region through which the second end section passes during the rotation,
wherein there is an area interposed between an adjacent two of the plurality of cutouts in the peripheral part, the area having ends that are the first end section of one of the adjacent two of the plurality of cutouts and the second end section of the other of the adjacent two of the plurality of cutouts, the area including:
a first region extending from the first end section along a rotation direction of the grass cutter blade;
a second region projecting from an end opposite to the first end section in the first region in a direction away from the rotation axis; and
a third region continued to the second end section from a protruding tip end of the second region.

4. The grass cutter blade according to claim 1 or claim 2,
wherein the region through which the first end section passes during the rotation is located at an outer side of the region through which the second end section passes during the rotation,
wherein there is an area interposed between an adjacent two of the plurality of cutouts in the peripheral part, the area having ends that are the first end section of one of the adjacent two of the plurality of cutouts and the second end section of the other of the adjacent two of the plurality of cutouts, the area including:
a first surface extending from the first end section toward the second end section; and
a second surface extending from the second end section toward the first end section,
wherein the first surface includes a surface having a distance from the rotation axis, the distance from the rotation axis becoming greater as the surface extends from the first end section to the second end section, and
wherein the second surface includes a surface having a distance from the rotation axis, the distance from the rotation axis becoming greater as the surface extends from the second section to the first end section.

5. A grass cutter blade for use in a grass cutter, the grass cutter blade comprising:
a connection part for connection to the grass cutter; and
a peripheral part extending from the connection part as a center and having an outer periphery that is inclined downwardly,
wherein the peripheral part is provided with a plurality of through holes and includes a region located further away from a rotation axis of the grass cutter blade than an edge portion of each of the plurality of through holes, and
wherein, in the edge portion of each of the plurality of through holes, a predetermined range in an up-and-down direction of a front region located in a rotation direction of the grass cutter blade is provided at a position closer to the rotation axis than the predetermined range of the back region located at an opposite side of the rotation direction in the edge portion of each of the through holes.

6. The grass cutter blade according to claim 5,
wherein a protrusion extending in the up-and-down direction and protruding outwardly are formed in a portion below each of the plurality of through holes in the grass cutter blade.

7. The grass cutter blade according to any one of claims 1 to 6,
wherein the connection part is formed in a surface recessed downwardly from a surrounding portion of the connection part.

8. A grass cutter blade for a grass cutter, the grass cutter blade comprising a plurality of blade sections at an outer circumference of the grass cutter blade,
wherein the grass cutter blade has a generally circular shape when viewed as a top view, and has a curved shape that is curved downwardly toward the outer circumference, and
wherein an angle formed by a tip end of each of the plurality of blade sections and a plane through which respective tip ends of at least three of the plurality of blade sections pass, the respective tip ends being located at a side of the outer circumference, is in a range of 30° to 60°.

9. A grass cutter provided with the grass cutter blade according to any one of claims 1 to 8.
